Europäisches Patentamt

European Patent Office

Office européen des brevets

(19)

(11) Publication number: **0 321 061**
**A2**

## (12) EUROPEAN PATENT APPLICATION

(21) Application number: 88202901.0

(22) Date of filing: 15.12.88

(51) Int. Cl.⁴: **C10G 45/64 , B01J 29/04**

(30) Priority: 17.12.87 GB 8729448

(43) Date of publication of application:
21.06.89 Bulletin 89/25

(84) Designated Contracting States:
**BE DE ES FR GB IT NL SE**

(71) Applicant: **SHELL INTERNATIONALE**
**RESEARCH MAATSCHAPPIJ B.V.**
**Carel van Bylandtlaan 30**
**NL-2596 HR Den Haag(NL)**

(72) Inventor: **Hoek, Arend**
**Badhuisweg 3**
**NL-1031 CM Amsterdam(NL)**
Inventor: **Van de Griend, Jacob Adrianus**
**Badhuisweg 3**
**NL-1031 CM Amsterdam(NL)**
Inventor: **Huizinga, Tom**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Process for the catalytic dewaxing of a hydrocarbon oil.**

(57) Process for the catalytic dewaxing of a wax-containing hydrocarbon oil by contacting the hydrocarbon oil at elevated temperature and pressure in the presence of hydrogen with a catalyst containing a crystalline gallium silicate the composition of which, expressed in terms of the molar ratios of the oxides, comprises a $SiO_2:Ga_2O_3$ molar ratio of greater than 100 up to 500, and which gallium silicate has an X-ray diffraction pattern containing the four strongest lines at interplanar spacings (d), expressed in Å, of $11.1\pm0.2$, $10.0\pm0.2$, $3.84\pm0.07$ and $3.72\pm0.06$.

EP 0 321 061 A2

# PROCESS FOR THE CATALYTIC DEWAXING OF A HYDROCARBON OIL

The present invention relates to a process for the catalytic dewaxing of a wax-containing hydrocarbon oil by contacting the oil with a catalyst that comprises a crystalline metal silicate in the presence of hydrogen.

Hydrocarbon oils, such as lubricating oils, may contain wax that essentially consists of high molecular weight unbranched or slightly branched paraffins which may crystallize when the oil is cooled. To avoid problems during storage, transport or use of such oils, the wax needs to be removed from the oil. One may remove the wax by cooling so that the wax solidifies and can be removed by filtration. Another procedure is to carry out the cooling in the presence of at least one solvent. Such a procedure is known as solvent dewaxing. The procedure can be divided into three steps: mixing the oil with the solvent(s) and chilling; filtration of the chilled oil to separate the wax; and recovery of the solvents and their recycling to the mixing step. Solvent-dewaxing is a complex and much energy-consuming process and, therefore, alternative processes have been sought.

Such an alternative is the selective hydrocracking of the high molecular weight paraffins by contacting the wax-containing oil in the presence of hydrogen with a suitable catalyst. In US-A-3,700,585 a dewaxing process is described in which the wax-containing oil is contacted with a ZSM-5 type zeolite having a composition in terms of oxides of:

$$(0.90\pm0.2)X_{2/n}\ O.W_2O_3.5\text{-}100\ YO_2.zH_2O$$

in which X is a cation, n is the valence of X, W is aluminium or gallium, Y is silicon or germanium and z is 0-40. The specification specifically discloses silicates in which W is aluminium and Y is silicon. The silica:alumina ratio ranges in particular from 10 to 60. The ZSM-5 type zeolites are further characterized by their X-ray diffraction pattern showing the four strongest lines at interplanar spacing (d), expressed in Å, of 11.1 ± 0.2, 10.0 ± 0.2, 3.84 ± 0.07 and 3.72 ± 0.06.

The procedure of selective hydrocracking is known as catalytic dewaxing. During catalytic dewaxing high molecular weight hydrocarbons are hydrocracked; so, associated with the catalytic dewaxing, relatively light, i.e. low-molecular weight, products are produced. It has been found that use of the crystalline aluminosilicate of the prior art document results in the formation of a satisfactorily dewaxed oil, but at the same time in the production of a considerable amount of low-value gaseous products, viz. $C_{1-4}$-hydrocarbons (hydrocarbons with from 1 to 4 carbon atoms).

It has now been found that the production of gaseous products can greatly be reduced by the use of specific crystalline gallium silicates, having an X-ray diffraction pattern similar to that of ZSM-5 type zeolites.

Accordingly, the present invention provides a process for the catalytic dewaxing of a wax-containing hydrocarbon oil comprising contacting the hydrocarbon oil at elevated temperature and pressure in the presence of hydrogen with a catalyst containing a crystalline gallium silicate, the composition of which, expressed in terms of the molar ratios of the oxides, comprises a $SiO_2:Ga_2O_3$ molar ratio of greater than 100 up to 500, and which gallium silicate has an X-ray diffraction pattern containing the four strongest lines at interplanar spacings (d), expressed in Å, of 11.1±0.2, 10.0±0.2, 3.84±0.07 and 3.72±0.06.

The preparation of crystalline gallium silicates is known in the art. In this respect reference is made to e.g. EP-A-107,875, describing the preparation of both aluminium silicates and gallium silicates.

It is evident to the person skilled in the art that the crystalline gallium silicates contain other cations for making up for the negative electrovalency because of $GaO_4^-$-tetrahedra present in the structure of the gallium silicates. Suitably these cations are hydrogen, ammonium, alkali metal or alkaline earth metal ions, but they can also be selected from metal ions from other groups of the Periodic Table of the Elements, such as Group 8 metals, e.g. iron, cobalt, nickel, platinum and palladium, Group 1b and 2b metals, e.g. copper, zinc and cadmium, and rare earth metals. These cations can be present due to the composition of the aqueous mixture from which the crystalline gallium silicates have been prepared or they can be incorporated in the crystalline gallium silicate by ion-exchange. For the nomenclature of the groups in the Periodic Table of the Elements reference is made to the "Handbook of Chemistry and Physics", 56th Ed., CRC Press, Cleveland Ohio, USA, 1976.

A surprising feature of the present invention is not solely a reduction of the gas make during the use of the gallium silicates in catalytic dewaxing but also the possibility that silicates can be used beyond the $SiO_2:Ga_2O_3$ range of 5 to 100. The production of the silicates is less expensive when a relatively small amount of gallium is used. Moreover, the use of gallium silicates having a $SiO_2:Ga_2O_3$ molar ratio of more than 100 in catalytic dewaxing results in dewaxed oils with an excellent viscosity index. The $SiO_2:Ga_2O_3$ ratio is in particular from 110 to 350.

The pour point of the dewaxed oil is considerably reduced in comparison with that of the hydrocarbon oil to be dewaxed. The conditions of the dewaxing step, in particular the reaction temperature, can be adjusted such that a predetermined pour point of the dewaxed oil is obtained.

When the gallium silicates are used as catalysts they are suitably available in the form of particles with a diameter of 0.5-5 mm. They are usually obtained in the form of a fine powder. Therefore, the gallium silicates may be shaped to form particles of a larger size, for instance by pressing or extrusion. During shaping they may be combined with a binder material, such as a refractory oxide like silica, silica-alumina, alumina, magnesia, titania and the like. Preferably, the binder material is selected from silica, silica-alumina and alumina.

To improve the performance of the catalyst, in particular to reduce the deactivation rate, the catalyst preferably further contains a hydrogenating/dehydrogenating metal component. Suitable metals can be selected from Groups 2b, 4b, 5b, 6b, 7b and 8 of the Periodic Table of the Elements. Of particular interest are the metals zinc, titanium, vanadium, molybdenum, tungsten, chromium, rhenium, iron, nickel, cobalt, platinum, palladium, ruthenium, rhodium, osmium and iridium, and mixtures thereof such as nickel-tungsten, cobalt-molybdenum, nickel-molybdenum or cobalt-tungsten. Preferred are hydrogenating/dehydrogenating metals selected from Group 8 of the Periodic Table, in particular from the group consisting of nickel, palladium and platinum.

The metals or their compounds may be deposited on the crystalline silicates by means of any process for the preparation of catalysts known in the art, such as ion-exchange, impregnation and/or precipitation. Alternatively, the metals or their compounds, especially noble metals, can be deposited on a binder material before combining said material, suitably in a weight ratio from 0.2-10 (silicate to binder), with the crystalline silicate by means of extruding, pressing or other types of solids-mixing known in the art. The binder for this purpose may be any of the conventional refractory oxides (e.g. silica, silica-alumina and/or alumina) or molecular sieve materials applied in catalysts; preferably a binder material is used which contains no or only very little alkali metal.

The metal-loaded crystalline silicate-containing catalysts preferably comprise from 0.01-50% by weight, in particular 0.02-20% by weight of a metal from Group 2b, 4b, 5b, 6b, 7b and/or 8. Noble metals from Group 8, in particular platinum and palladium, are preferably present in the catalysts in an amount from 0.01-5% by weight, in particular from 0.02-2% by weight. Percentages are based on the total of metal and metal silicate.

Suitable hydrocarbon oils that can be used in the process of the present invention include lubricating base oils which may be either distillate or residual lubricating oils or mixtures thereof. Also synthetic hydrocarbon oils that contain wax can be subjected to the present process. The process according to the present invention can also be employed for the reduction of the pour point of other types of oils, such as transformer oils, or for the reduction of the freezing point of kerosenes and gas oils. Preferably the hydrocarbon to be dewaxed is a mineral lubricating base oil.

The hydrocarbon oil to be dewaxed may have been subjected to one or more other treatments before it is catalytically dewaxed. A suitable pretreatment is a solvent dewaxing step. This treatment is advantageous since wax obtained in the solvent dewaxing step is a valuable by-product, which can be converted into a high-quality lubricating oil, whereas the solvent dewaxing is used to only slightly reduce the pour point of the feedstock used so that no excessive energy consumption is required. The main reduction of the pour point is accomplished by the catalytic dewaxing step, in which the formation of low-value light products can be kept to a minimum now that part of the wax, which otherwise would be hydrocracked, has already been removed. The reversed order is also possible. It may further be advantageous to subject the hydrocarbon oil either before or after the catalytic dewaxing step to a hydrotreatment.

The wax content in the hydrocarbon oil to be treated is not critical. Variations from 5% to 40 %w are feasible. As mentioned above wax consists essentially of paraffinic hydrocarbons which readily separate by crystallization when an oil fraction containing them is cooled, in the absence or in the presence of one or more solvents (e.g. ketones like acetone, methylethylketone, methyl isopropyl ketone and/or aromatics like benzene, toluene, naphtha). Conveniently wax include those hydrocarbons which separate by crystallization when the oil fraction is cooled to -50 °C, suitably from -10 to -40 °C. The wax content of 5 to 40 %w is determined after cooling the oil fraction to a temperature which can be as low as -50 °C.

The process according to the invention may very suitably be carried out at a temperature of from 200-500 °C, a hydrogen pressure of from 5-100 bar, a space velocity of from 0.1-5.0 $kg.l^{-1}.h^{-1}$ and a hydrogen/oil ratio of from 100-2500 $Nl.kg^{-1}$. The process is preferably carried out at a temperature of from 250-450 °C, a hydrogen pressure of from 10-75 bar, a space velocity of from 0.3-3 kg.1$^{-1}$.h$^{-1}$ and a hydrogen/oil ratio of from 200-2000 Nl.kg$^{-1}$.

The invention is now illustrated by means of the following example.

EXAMPLE

A crystalline gallium silicate was prepared substantially as described in EP-A-107,875. An aluminium silicate was prepared essentially in accordance with the procedure of US-A-3,700,585. Both metal silicates had an X-ray diffraction pattern in which the four strongest lines appeared at d(Å) of 11.1, 10.0, 3.84 and 3.72. The intensities of the lines in the X-ray diffraction patterns varied slightly due to the presence of different trivalent cations and/or due to different amounts of these cations, but all patterns were similar to the one shown in Table B of EP-A-107,875. The negative electrovalency was made up for by protons.

The gallium silicate was loaded with 0.2 %w palladium by ion-exchange with a Pd(NH$_4$)Cl$_2$-solution. Subsequently, the ion-exchanged metal silicate was dried at 120 °C and calcined at 525 °C.

Both metal silicates obtained were used in a catalytic dewaxing process after dilution of the metal silicate with 0.2 mm SiC (volume ratio 1:1). A North Sea waxy raffinate useful as a base material for lubricating oil and containing about 21 %w of wax determined after solvent dewaxing with methylethylketone/toluene (1:1 by volume) at -30 °C, had a pour point of +32 °C (ASTM D97). This raffinate was dewaxed over each metal silicate at a hydrogen pressure of 40 bar, a space velocity of 1.0 kg/l catalyst.h, a H$_2$/raffinate ratio of 500 Nl/kg and at such a temperature that the product had a pour point of -20 °C (ASTM D-97). The catalyst, reaction temperature and the product yields are indicated in the Table below.

TABLE

| Experiment No. | 1 | 2 |
|---|---|---|
| Silica/metal oxide ratio | 280 SiO$_2$/Ga$_2$O$_3$ | 88 SiO$_2$/Al$_2$O$_3$ |
| Palladium content, %w | 0.2 | - |
| Temperature, °C | 290 | 278 |
| Product yield, %w | | |
| C$_{1-4}$ | 5.6 | 11.6 |
| C$_5$-370 °C | 29.6 | 23.3 |
| 370$^+$ °C | 64.8 | 65.1 |
| Dewaxed oil yield, (300$^+$ °C), %w on feed | 75 | 75 |
| VI, dewaxed oil | 95 | 96 |
| Pour point, °C | -20 | -20 |

From the above results it is apparent that the gas make is considerably reduced in experiment 1 compared with experiment 2.

## Claims

1. Process for the catalytic dewaxing of a wax-containing hydrocarbon oil comprising contacting the hydrocarbon oil at elevated temperature and pressure in the presence of hydrogen with a catalyst containing a crystalline gallium silicate, the composition of which, expressed in terms of the molar ratios of the oxides, comprises a SiO$_2$:Ga$_2$O$_3$ molar ratio of greater than 100 up to 500, and which gallium silicate has an X-ray diffraction pattern containing the four strongest lines at interplanar spacings (d), expressed in Å, of 11.1±0.2, 10.0±0.2, 3.84±0.07 and 3.72±0.06.

2. Process according to claim 1 in which the gallium silicate has a SiO$_2$:Ga$_2$O$_3$ molar ratio of from 110 to 350.

3. Process according to claim 1 or 2, in which the catalyst further contains a hydrogenating/dehydrogenating metal component.

4. Process according to claim 3, in which the hydrogenating/dehydrogenating metal is selected from the metals from Groups 2b, 4b, 5b, 6b, 7b and 8 of the Periodic Table of the Elements.

4

5. Process according to claim 4, in which the hydrogenating/dehydrogenating metal is selected from Group 8.

6. Process according to claim 5, in which the hydrogenating/dehydrogenating metal is selected from nickel, palladium and platinum.

7. Process according to any one of claims 1-6 in which the hydrocarbon oil to be dewaxed is a mineral lubricating base oil.

8. Process according to any one of claims 1-7 in which the process is carried out at a temperature of from 200 to 500 °C, a hydrogen pressure of from 5 to 100 bar, a space velocity of from 0.1 to 5 kg/l catalyst.h and a hydrogen/oil ratio of from 100 to 2500 Nl/kg.

9. Process according to claim 8 in which the process is carried out at a temperature of from 250 to 450 °C, a hydrogen pressure of from 10 to 75 bar, a space velocity of from 0.3 to 3 kg/l catalyst.h and a hydrogen/oil ratio of from 200 to 2000 Nl/kg.

10. Hydrocarbon oil whenever dewaxed according to a process according to any one of claims 1-9.